# EUROPÄISCHE PATENTSCHRIFT

(11) **EP 2 404 095 B1**
(45) Veröffentlichungstag und Bekanntmachung des Hinweises auf die Patenterteilung: **07.01.2015**
(21) Anmeldenummer: 10710538.9
(22) Anmeldetag: 03.03.2010
(51) Int. Cl.: F16L 23/14, E04F 17/04, F16B 5/06, F24F 13/02

(54) **Flanschprofil zum luftdichten Verbinden eines Luftkanals**
Flange profile for connecting an air duct in an air-tight manner
Bride profilée pour raccorder un conduit d'air de manière étanche à l'air

(30) Priorität: 05.03.2009 DE 102009011380
(43) Veröffentlichungstag der Anmeldung: 11.01.2012
(60) Teilanmeldung: 14172075.5
(73) Patentinhaber: Hermanussen Metallverarbeitung GmbH, 59457 Werl (DE)
(72) Erfinder: DRAVENAU, Paul, 10119 Berlin (DE); TENNER, Martin, 59457 Werl (DE); LEHMANN, Jörg, 59457 Werl (DE)
(74) Vertreter: Isfort, Olaf
(86) Internationale Anmeldenummer: PCT/EP2010/001308
(87) Internationale Veröffentlichungsnummer: WO 2010/099942

(56) Entgegenhaltungen:
- EP-A1- 0 225 438
- EP-A1- 0 594 261
- EP-A1- 0 678 696
- EP-A1- 0 795 711
- DE-A1- 3 618 822
- DE-A1- 4 117 169
- DE-A1- 4 303 150
- DE-A1- 10 353 568
- DE-A1-102005 057 934
- DE-B3-102007 012 015
- DE-T2- 68 907 727
- DE-U1- 20 012 782
- DE-U1-202007 007 165
- DE-U1-202007 016 521
- FR-A1- 2 795 802
- GB-A- 2 138 090
- US-A- 4 218 079
- US-A- 4 297 049

## Beschreibung

Die Erfindung betrifft ein Flanschprofil zum luftdichten Verbinden von zwei Luftkanalabschnitten eines Luftkanals, das als im Querschnitt im Wesentlichen L-förmiges Hohlprofil aus gefalztem Blech ausgebildet ist, wobei
- die L-Schenkel des Flanschprofils doppelwandig ausgebildet sind und jeweils eine Innenwandung und eine Außenwandung aufweisen,
- die Wandungen des ersten L-Schenkels eine endseitig offene Einstecktasche zum Einstecken der Wandung eines der Luftkanalabschnitte bilden,
- die Wandungen des zweiten L-Schenkels eine Aufnahmekammer zur Aufnahme eines Schenkels eines Eckwinkelstückes bilden,
- der zweite L-Schenkel an seiner der Trennfuge zwischen den Luftkanalabschnitten zugewandten Innenwandung einen entlang der Längserstreckung des Flanschprofils verlaufenden, in das Innere des Hohlprofils hinein bis an die Außenwandung des zweiten L-Schenkels heran ragenden Wulstfalz aufweist, der die Wandung des Luftkanalabschnittes beim Einstecken in der Einstecktasche führt und einen Scheitel aufweist, wobei die Außenwandung des zweiten L-Schenkels im Übergangsbereich zu der Außenwandung des ersten L-Schenkels einen Zwischenabschnitt mit zu dem Wulstfalz komplementärer, nach außen gewölbter und gerundeter Form hat, wobei das Flanschprofil nach dem Verschweißen mit einer in die Einstecktasche eingesteckten Wandung des Luftkanalabschnittes in der Weise verformbar ist, dass der Scheitel des Wulstfalzes an die Außenwandung des zweiten L-Schenkels im Bereich des Zwischenabschnittes flächig anpressbar ist.

Der erste L-Schenkel des Flanschprofils erstreckt sich bei bestimmungsgemäßer Anordnung des Flanschprofils an der Wandung eines Luftkanalabschnittes im Wesentlichen parallel zu dieser Wandung. Der zweite L-Schenkel ist im Wesentlichen senkrecht zu der Wandung angeordnet. Die Begriffe "Innenwandung" und "Außenwandung" sind im Sinne der Erfindung so zu verstehen, dass nach dem Verbinden der Luftkanalabschnitte zu einem Luftkanal die Außenwandungen der L-Schenkel des Flanschprofils von außen zugänglich sind, während die Innenwandungen der L-Schenkel nicht zugänglich an oder in dem Luftkanal angeordnet sind. Dabei ist die Innenwandung des die Einstecktasche ausbildenden ersten L-Schenkels in dem Luftkanal und die Innenwandung des zweiten L-Schenkels im Wesentlichen in der Ebene der Trennfuge zwischen den miteinander verbundenen Luftkanalabschnitten angeordnet.

Aus der gattungsbildenden DE 20 2007 007 165 U1 ist ein gewalztes Flanschprofil bekannt mit einer auf das Ende eines Luftkanalelements aufschiebbaren ersten Kammer und einer von dieser luftdicht abgetrennten, winklig zu dieser angeordneten zweiten Kammer, wobei das Außen- und Innenblech zwischen den beiden Luftkammern übereinandergefalzt ist.

Die DE 36 18 822 A1 beschreibt ein Luftkanalverbindungsprofil mit Dichtung zur Herstellung von Flanschen, wobei die Dichtung nicht in dem Bereich, der für das Punktschweißen vorgesehen ist, liegt.

Die DE 20 2007 016 521 U1 beschreibt eine Vorrichtung zur Verbindung von Luftkanalelementen mit Flanschprofilen, wobei in den Flanschprofilen in dem Boden ein Dichtstoff eingebracht ist.

Ein Flanschprofil der eingangs angegebenen Art ist beispielsweise auch aus der DE 43 031 150 A1 bekannt. Mit diesem Flanschprofil soll eine sichere und genaue Montage desselben auf einem Luftkanalteilstück gewährleistet und damit eine dauerhafte luftdichte Verbindung des Flanschprofils mit dem Luftkanalteilstück sowie der Luftkanalteilstücke untereinander hergestellt werden. Die Dichtungswirkung soll elastisch erhalten bleiben und den technologischen Forderungen auf ausreichende Passbarkeit bei der Fertigung des Flanschprofils und seiner Montage Rechnung tragen. Hierzu ist der Scheitel des in dem Flanschprofil eingearbeiteten Wulstfalzes mit einer elastischen Dichtungsmasse bedeckt, die an der inneren Seite der Außenwandung des zweiten L-Schenkels elastisch anliegend den konstruktiv vorgesehenen Spalt zwischen dieser Außenwandung sowie dem Scheitel des Wulstfalzes hermetisch verschließt.

Nachteilig bei dieser Ausgestaltung eines Flanschprofils ist, dass die Außenwandungen der L-Schenkel nach dem Verschweißen des Flanschprofils mit einem Luftkanalabschnitt nicht mit den Innenwandungen der L-Schenkel zusammenwirken. Sie sind lediglich über die elastische Dichtmasse miteinander verbunden. Wirkt eine Kraft auf einen Teil des Flanschprofils ein, so kann diese Kraft nicht auf andere Teile des Flanschprofils übertragen werden, sondern führt zu ungewünschten Deformationen des Flanschprofils sowohl im elastischen als auch im plastischen Bereich.

Hiervon ausgehend ist es die Aufgabe der vorliegenden Erfindung, ein Flanschprofil zum luftdichten Verbinden von zwei Luftkanalabschnitten eines Luftkanals bereitzustellen, welches gegenüber herkömmlichen Flanschprofilen deutlich bessere Stabilitäts- und Abdichteigenschaften aufweist.

Diese Aufgabe wird durch ein Flanschprofil der eingangs genannten Art erfindungsgemäß dadurch gelöst, dass in dem Hohlraum des Flanschprofils ein entlang der Längserstreckung des Flanschprofils verlaufender, im Inneren der Einstecktasche im Bereich des Scheitels des Wulstfalzes angeordneter Dichtmittelstrang vorhanden ist und dass an der Innenwandung des ersten L-Schenkels auf Höhe des Scheitels des Wulstfalzes eine in das Innere des Luftkanals ragende Sicke ausgebildet ist, die den Dichtmittelstrang zumindest teilweise aufnimmt.

Erfindungsgemäß ist somit ein Zwischenabschnitt vorgesehen, welcher bei bestimmungsgemäßer Anordnung des Flanschprofils an dem Luftkanalabschnitt an dem Scheitel des Wulstfalzes anliegt, um somit die Stabilität und auch die Dichtwirkung des Flanschprofils zu verbessern. Diese Konfiguration nimmt das Flanschprofil insbesondere dann ein, wenn es nach dem Einstecken der Wandung des Luftkanalabschnitts in die Einstecktasche mit der Wandung (z.B. durch Punktschweißen oder durch eine Druckfügetechnik) verbunden wird. Das Flanschprofil ist nach dem Verschweißen mit der Wandung des Luftkanalabschnittes in der Weise verformt, dass der Scheitel des Wulstfalzes an die Außenwandung des zweiten L-Schenkels im Bereich des Zwischenabschnittes flächig angepresst wird. Hierdurch wird die Stabilität und Dichtwirkung des Flanschprofils weiter verbessert. Kräfte, die auf einen Teil des Flanschprofils einwirken, können effektiv auf weitere Teile des Flanschprofils übertragen werden, ohne dass es hierbei zu nennenswerten Deformationen des Flanschprofils kommt.

In dem Hohlraum des Flanschprofils ist ein entlang der Längserstreckung des Flanschprofils verlaufender, im Inneren der Einstecktasche im Bereich des Scheitels des Wulstfalzes angeordneter Dichtmittelstrang vorhanden. Der Dichtmittelstrang ist somit im Inneren der Einstecktasche angeordnet, und nicht, wie aus dem Stand der Technik bekannt, zwischen dem Scheitel des Wulstfalzes und der Außenwandung des zweiten L-Schenkels. Diese Anordnung des Dichtmittelstranges erzeugt nicht nur eine Abdichtung der Aufnahmekammer des Eckwinkelstückes gegenüber der Einstecktasche des Flanschprofils, sondern auch eine Abdichtung des Spalts zwischen der Innenwandung des ersten L-Schenkels und der in die Einstecktasche eingesteckten Wandung des Luftkanalabschnittes. Hierdurch wird das Austreten von Luft aus dem Luftkanal über das Flanschprofil reduziert. Zudem wird durch die Anordnung der Dichtmasse zwischen dem Scheitel des Wulstfalzes, dem Zwischenabschnitt und der in die Einstecktasche eingesteckten Wandung dem Flanschprofil eine sehr hohe Formstabilität verliehen. Das erfindungsgemäße Flanschprofil weist somit sehr gute Stabilitätseigenschaften auf, die mit Flanschprofilen des Standes der Technik nicht erreicht werden können.

Die aus dem Stand der Technik bekannte Anordnung der elastischen Dichtmasse zwischen dem Scheitel des Wulstfalzes und der Außenwandung des zweiten L-Schenkels ist nachteilig, da hierdurch lediglich eine Abdichtung der zur Aufnahme des Eckwinkelstückes zwischen den Wandungen des zweiten L-Schenkels vorgesehenen Aufnahmekammer gegenüber der durch den ersten L-Schenkel ausgebildeten Einstecktasche gegeben ist. Bei dieser Art der Abdichtung kann es vorkommen, dass durch den Luftkanal geführte Luft durch den Spalt zwischen der Innenwandung des ersten L-Schenkels und der in die Einstecktasche eingesteckten Wandung des Luftkanalabschnittes und von dort über den Spalt zwischen der Außenwandung des ersten L-Schenkels des Flanschprofils und der in die Einstecktasche eingesteckten Wandung des Luftkanalabschnittes in die Umgebung gelangt. In Anbetracht der heutigen Qualitäts- und Sicherheitsanforderungen an Luftkanäle, insbesondere solchen von luftführenden Hochdruckanlagen, ist eine derartige Ausgestaltung hinsichtlich der Dichtigkeit nicht zufrieden stellend.

Erfindungsgemäß ist ferner an der Innenwandung des ersten L-Schenkels auf Höhe des Scheitels des Wulstfalzes eine in das Innere des Luftkanals ragende Sicke ausgebildet, die den Dichtmittelstrang zumindest teilweise aufnimmt. Die Sicke dient dazu, die Position des Dichtmittelstranges, insbesondere beim Einstecken der Wandung des Luftkanals in die Einstecktasche, zu sichern. Die Sicke hat zudem eine stabilisierende Wirkung und dient somit zur Erhöhung der Formsteifigkeit eines damit versehenen Flanschprofils.

Eine vorteilhafte Ausgestaltung der Erfindung sieht vor, dass der Dichtmittelstrang durch Einschieben der Wandung des Luftkanalabschnittes in die Einstecktasche teilbar ist, in der Weise, dass ein Teil des Dichtmittels in den Spalt zwischen dem Scheitel des Wulstfalzes und der Außenwandung des zweiten L-Schenkels gepresst wird und ein anderer Teil des Dichtmittels den Spalt zwischen der Wandung des Luftkanalabschnittes und der Innenwandung des ersten L-Schenkels zumindest teilweise ausfüllt. Auf diese Weise sind sämtliche Bereiche des Profils gegeneinander zuverlässig abgedichtet.

In einer vorteilhaften Ausführungsform der Erfindung ist das Dichtmittel des Dichtmittelstranges klebend. Dieses dient insbesondere der Lagesicherung des Flanschprofils an der Wandung des Luftkanalabschnittes vor dem Verschweißen von Flanschprofil und Wandung. Des Weiteren können so der Scheitel des Wulstfalzes, der Zwischenabschnitt und die in die Einstecktasche eingesteckte Wandung miteinander verklebt werden, was die Formstabilität des Flanschprofils verbessert.

Weitere Vorteile und Merkmale der vorliegenden Erfindung werden im Folgenden anhand der in den Figuren gezeigten Ausführungsbeispiele näher erläutert. Dabei zeigen:

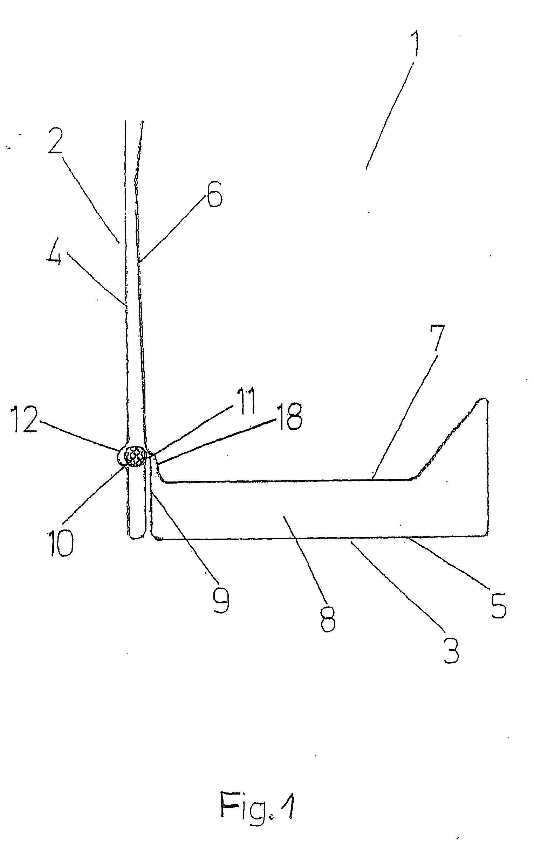

- Figur 1:: Querschnitt eines Ausführungsbeispiels eines erfindungsgemäßen Flanschprofils.

Figur 1 zeigt einen Querschnitt eines Ausführungsbeispiels des erfindungsgemäßen Flanschprofils 1 zum luftdichten Verbinden von zwei Luftkanalabschnitten eines Luftkanals. Das Flanschprofil 1 ist als im Querschnitt im Wesentlichen L-förmiges Hohlprofil aus gefalztem Blech ausgebildet. Die L-Schenkel 2 und 3 des Flanschprofils 1 sind doppelwandig ausgebildet. Die L-Schenkel 2 und 3 weisen jeweils eine Innenwandung 4 bzw. 5 und eine Außenwandung 6 bzw. 7 auf. Die Wandungen 4 und 6 des ersten L-Schenkels 2 bilden eine endseitig offene Einstecktasche zum Einstecken der Wandung eines nicht dargestellten Luftkanalabschnittes aus. Die Wandungen 5 und 7 des zweiten L-Schenkels 3 bilden eine Aufnahmekammer 8 zur Aufnahme eines nicht dargestellten Schenkels eines Eckwinkelstückes aus. Der zweite L-Schenkel 3 weist an seiner Innenwandung 5 einen entlang der Längserstreckung des Flanschprofils 1 verlaufenden, in das Innere des Hohlprofils hinein bis an die Außenwandung 7 heranragenden Wulstfalz 9 auf. Dieser dient zur Führung der Wandung des Luftkanalabschnittes beim Einstecken in die Einstecktasche. In dem Hohlraum des Flanschprofils 1 ist zudem ein entlang der Längserstreckung des Flanschprofils 1 verlaufender, im Inneren der Einstecktasche im Bereich des Scheitels 11 des Wulstfalzes 9 angeordneter Dichtmittelstrang 10 vorhanden. Die Außenwandung 7 des zweiten L-Schenkels 3 weist in dem Übergangsbereich zur Außenwandung 6 des ersten L-Schenkels 2 einen Zwischenabschnitt 18 mit zu dem Wulstfalz 9 komplementärer, nach außen gewölbter und gerundeter Form auf. Nach dem Verschweißen des Flanschprofils 1 mit einem nicht dargestellten Luftkanalabschnitt kann der Wulstfalz 9 mit dem Zwischenabschnitt 18 derart zusammenwirken, dass das Flanschprofil 1 weitestgehend gegen Deformationen bei Krafteinwirkung geschützt ist. Solche Deformationen würden sich auch nachteilig auch die Dichtwirkung des Flanschprofils 1 auswirken können.

Ferner ist an der Innenwandung 4 des ersten L-Schenkels 2 auf Höhe des Scheitels 11 des Wulstfalzes 9 eine in das Innere des (nicht dargestellten) Luftkanals ragende Sicke 12 ausgebildet, die den Dichtmittelstrang 10 zumindest teilweise aufnimmt.

## Patentansprüche

1. Flanschprofil (1) zum luftdichten Verbinden von zwei Luftkanalabschnitten eines Luftkanals, das als im Querschnitt im Wesentlichen L-förmiges Hohlprofil aus gefalztem Blech ausgebildet ist, wobei
- die L-Schenkel (2, 3) des Flanschprofils (1) doppelwandig ausgebildet sind und jeweils eine Innenwandung (4, 5) und eine Außenwandung (6, 7) aufweisen,
- die Wandungen (4, 6) des ersten L-Schenkels (2) eine endseitig offene Einstecktasche zum Einstecken der Wandung eines der Luftkanalabschnitte bilden,
- die Wandungen (5, 7) des zweiten L-Schenkels (3) eine Aufnahmekammer (8) zur Aufnahme eines Schenkels eines Eckwinkelstückes bilden,
- der zweite L-Schenkel (3) an seiner der Trennfuge zwischen den Luftkanalabschnitten zugewandten Innenwandung (5) einen entlang der Längserstreckung des Flanschprofils (1) verlaufenden, in das Innere des Hohlprofils hinein bis an die Außenwandung (7) des zweiten L-Schenkels (3) heran ragenden Wulstfalz (9) aufweist, der die Wandung des Luftkanalabschnittes bei ihrem Einstecken in die Einstecktasche führt und einen Scheitel (11) aufweist, wobei die Außenwandung (7) des zweiten L-Schenkels (3) im Übergangsbereich zu der Außenwandung (6) des ersten L-Schenkels (2) einen Zwischenabschnitt (18) mit zu dem Wulstfalz (9) komplementärer, nach außen gewölbter und gerundeter Form hat, wobei das Flanschprofil (1) nach dem Verschweißen mit einer in die Einstecktasche eingesteckten Wandung des Luftkanalabschnittes in der Weise verformt ist, dass der Scheitel (11) des Wulstfalzes (9) an die Außenwandung (7) des zweiten L-Schenkels (3) im Bereich des Zwischenabschnittes (18) flächig angepresst wird,
**dadurch gekennzeichnet, dass** in dem Hohlraum des Flanschprofils (1) ein entlang der Längserstreckung des Flanschprofils (1) verlaufender, im Inneren der Einstecktasche im Bereich des Scheitels (11) des Wulstfalzes (9) angeordneter Dichtmittelstrang (10) vorhanden ist und dass an der Innenwandung (4) des ersten L-Schenkels (2) auf Höhe des Scheitels (11) des Wulstfalzes (9) eine in das Innere des Luftkanals ragende Sicke (12) ausgebildet ist, die den Dichtmittelstrang (10) zumindest teilweise aufnimmt.

2. Flanschprofil (1) nach Anspruch 1, **dadurch gekennzeichnet, dass** der Dichtmittelstrang (10) durch Einschieben der Wandung des Luftkanalabschnittes in die Einstecktasche teilbar ist, in der Weise, dass ein Teil des Dichtmittels in den Spalt zwischen dem Scheitel (11) des Wulstfalzes (9), der Außenwandung (7) des zweiten L-Schenkels (3) und der Wandung des Luftkanalabschnittes gepresst wird und ein anderer Teil des Dichtmittels den Spalt zwischen der Wandung des Luftkanalabschnittes und der Innenwandung (4) des ersten L-Schenkels (2) zumindest teilweise ausfüllt.

3. Flanschprofil (1) nach einem der Ansprüche 1 oder 2, **dadurch gekennzeichnet, dass** das Dichtmittel des Dichtmittelstranges (10) klebend ist.

## Claims

1. Flange profile (1) for air-tight jointing of two air duct sections of an air duct configured in its cross-section mainly as a an L-shaped hollow profile made of a folded sheet metal, wherein
- the L-shaped legs (2, 3) of the said flange profile (1) are configured with double walls each having an inner wall (4, 5) and an outer wall (6, 7),
- the walls (4, 6) of the first L-shaped leg (2) forming an end-side open insertion pocket for insertion of the wall of one of the air duct sections,
- the walls (5, 7) of the second L-shaped leg (3) forming a take-up compartment (8) to take-up one leg of one angular corner piece,
- the second L-shaped leg (3) at its inner wall (5) facing the parting line between the air duct sections having a beaded fold (9) extending along the longitudinal extension of the flange profile (1) into the interior of the hollow profile and reaching up to the outer wall (7) of the second L-shaped leg (3), said beaded fold (9) guiding the wall of the air duct section on its insertion into the insertion pocket and having a crest (11), wherein the outer wall (7) of the second L-shaped leg (3) in the transitional area towards the outer wall (6) of the first L-shaped leg (2) has an intermediate section (18) being of an outwardly bulged and round shape complementary to the beaded fold (9), wherein after welding with a wall of the air duct section inserted into the insertion pocket the flange profile (1) is so deformed that the crest (11) of the beaded fold (9) is pressed planar against the outer wall (7) of the second L-shaped leg (3) in the area of the intermediate section (18)
**characterized in that** a sealing agent strand (10) extending along the longitudinal extension of the flange profile (1) and arranged in the interior of the insertion pocket in the area of the crest (11) of the beaded fold (9) is provided in the hollow space of the flange profile (1) and that a beading (12) protruding into the interior of the air duct is configured at the inner wall (4) of the first L-shaped leg (2) at the level of the crest (11) of the beaded fold (9) which at least partly takes-up the sealing agent strand (10).

2. Flange profile (1) according to claim 1, **characterized in that** the sealing agent strand (10) can be parted by sliding the wall of the air duct section into the insertion pocket, in such a manner that part of the sealing agent is pressed into the gap between the crest (11) of the beaded fold (9), the outer wall (7) of the second L-shaped leg (3) and the wall of he air duct section whereas another part of the sealing agent at least partly fills the gap between the wall of the air duct section and the inner wall (4) of the first L-shaped leg (2).

3. Flange profile (1) according to any one of the preceding claims 1 or 2, **characterized in that** the sealing agent of the sealing agent strand (10) is adhesive.

## Revendications

1. Bride profilée (1) pour relier de manière étanche à l'air deux tronçons d'un conduit d'air, laquelle est réalisée en tôle pliée sous forme de profilé creux avec une section transversale sensiblement en forme de L,
- les branches (2, 3) du L de la bride profilée (1) étant réalisées à double paroi et comportant chacune une paroi intérieure (4, 5) et une paroi extérieure (6, 7),
- les parois (4, 6) de la première branche (2) du L formant une poche d'enfichage ouverte à une extrémité pour l'enfichage de la paroi de l'un des tronçons du conduit d'air,
- les parois (5, 7) de la deuxième branche (3) du L formant une chambre de réception (8) pour recevoir une branche d'une pièce d'angle en équerre,
- la deuxième branche (3) du L comportant sur sa paroi intérieure (5), orientée vers le joint entre les tronçons du conduit d'air, un pli formant bourrelet (9) qui s'étend le long de la dimension longitudinale de la bride profilée (1), s'engage à l'intérieur du profilé creux jusqu'à la paroi extérieure (7) de la deuxième branche (3) du L et qui guide la paroi du tronçon du conduit d'air lors de son enfichage dans la poche d'enfichage et comporte un sommet (11), la paroi extérieure (7) de la deuxième branche (3) du L comportant, dans la zone de transition vers la paroi extérieure (6) de la première branche (2) du L, une partie intermédiaire (18) ayant une forme courbe vers l'extérieur et arrondie, complémentaire de celle du pli formant bourrelet (9), la bride profilée (1), après le soudage avec la paroi du tronçon du conduit d'air, enfichée dans la poche d'enfichage, étant déformée de telle sorte que le sommet (11) du pli formant bourrelet (9) est pressé de manière plane contre la paroi extérieure (7) de la deuxième branche (3) du L dans la zone de la partie intermédiaire (18),
**caractérisée en ce que** dans la zone creuse de la bride profilée (1) est prévue une bande d'étanchéité (10) qui s'étend le long de la dimension longitudinale de la bride profilée (1) et est disposée à l'intérieur de la poche d'enfichage dans la zone du sommet (11) du pli formant bourrelet (9), et **en ce que** sur la paroi intérieure (4) de la première branche (2) du L, à la hauteur du sommet (11) du pli formant bourrelet (9), est réalisée une nervure (12) qui s'engage à l'intérieur du conduit d'air et qui reçoit au moins en partie la bande d'étanchéité (10).

2. Bride profilée (1) selon la revendication 1, **caractérisée en ce que** la bande d'étanchéité (10), sous l'effet de l'introduction de la paroi du tronçon de conduit d'air dans la poche d' enfichage, peut être devisée de telle sorte qu'une partie du produit d'étanchéité est pressée dans la fente entre le sommet (11) du pli formant bourrelet (9), la paroi extérieure (7) de la deuxième branche (3) du L et la paroi du tronçon du conduit d'air, et une autre partie du produit d'étanchéité remplit au moins en partie la fente entre la paroi du tronçon du conduit d'air et la paroi intérieure (4) de la première branche (2) du L.

3. Bride profilée (1) selon la revendication 1 ou 2, **caractérisée en ce que** le produit d'étanchéité de la bande d'étanchéité (10) est adhésif.
